# EUROPÄISCHE PATENTSCHRIFT

(11) **EP 2 013 731 B1**
(45) Veröffentlichungstag und Bekanntmachung des Hinweises auf die Patenterteilung: **21.06.2017**
(21) Anmeldenummer: 07724723.7
(22) Anmeldetag: 28.04.2007
(51) Int. Cl.: G06F 11/07, G05B 9/03, G05B 19/042

(54) **SCHALTUNGSANORDNUNG UND VERFAHREN ZUM BETRIEB EINER SCHALTUNGSANORDNUNG**
CIRCUIT ARRANGEMENT, AND METHOD FOR THE OPERATION OF A CIRCUIT ARRANGEMENT
AGENCEMENT DE CIRCUIT ET PROCÉDÉ PERMETTANT DE FAIRE FONCTIONNER UN AGENCEMENT DE CIRCUIT

(30) Priorität: 03.05.2006 DE 102006020793
(43) Veröffentlichungstag der Anmeldung: 14.01.2009
(73) Patentinhaber: AB SKF, 415 50 Göteborg (SE)
(72) Erfinder: SCHOLER, Martin, 68870 Bartenheim (FR)
(74) Vertreter: Kohl, Thomas
(86) Internationale Anmeldenummer: PCT/EP2007/003796
(87) Internationale Veröffentlichungsnummer: WO 2007/124942

(56) Entgegenhaltungen:
- WO-A-90/03602
- WO-A-2005/106229
- GB-A- 2 129 587
- US-A- 4 906 979

## Beschreibung

Die Erfindung betrifft eine Schaltungsanordnung, umfassend einen ersten und einen zweiten, mit dem ersten verbundenen Mikrocontroller und ein Verfahren zum Betrieb einer Schaltungsanordnung.

Bei einer Vielzahl von technischen Geräten steht neben deren Hauptfunktion eine Sicherheit von Personen im Vordergrund, die in den Einflussbereich besagten Geräts kommen, was insbesondere für die Sicherheit von Patienten und den Gerätebedienern bei medizinischen Geräten gilt. Dabei benötigen viele dieser Geräte zur Ausführung ihrer Funktion im Inneren elektrische bzw. mechanische Energie, durch die es insbesondere bei einer Fehlbedienung oder einer Fehlfunktion des Gerätes zur Personengefährdung kommen kann. Zur Reduzierung dieses Gefährdungspotentials ist es beispielsweise bekannt, eine redundante Anordnung und/oder ein komplettes Überwachungssystem einzusetzen, was mit Nachteil mit einem vergleichsweise hohen Materialaufwand einhergeht.

Die Offenbarung WO90/03602 A1 offenbart eine Schaltungsanordnung, umfassend einen Mikrocontroller der mit einer Watchdog Einrichtung verbunden ist, wobei der Mikrocontroller derart eingerichtet ist, dass ein wenigstens ein Ausgangssignal des Mikrocontrollers steuernder oder regelnder Hauptprozess, und ein zum Erkennen eines Fehlerzustands des Mikrocontrollers ausgebildeter Sicherheitsprozess parallel ausführbar sind, und dass dass bei einem Erkennen eines Fehlerzustandes durch den Sicherheitsprozess die Watchdog Einrichtung ein gegenüber dem Ausgangssignal des ersten Mikrocontrollers vorrangiges Signal erzeugt.

Eine Aufgabe der Erfindung ist es daher, eine Schaltungsanordnung und ein Verfahr ren zum Betrieb einer Schaltungsanordnung zu schaffen, mit der bei vergleichsweise geringem Materialaufwand das eingangs genannte Gefährdungspotential reduzierbar ist.

Die Aufgabe wird hinsichtlich der Vorrichtung durch den Gegenstand des Anspruchs 1 und hinsichtlich des Verfahrens durch den Gegenstand des Anspruchs 8 gelöst. Die Erfindung betrifft eine Schaltungsanordnung, umfassend einen ersten und einen zweiten, mit dem ersten verbundenen Mikrocontroller, beinhaltend folgende Merkmale:
- Der erste Mikrocontroller ist derart ausgebildet, dass ein wenigstens ein Ausgangssignal des ersten Mikrocontrollers steuernder oder regelnder Hauptprozess und ein zum Erkennen eines Fehlerzustands des ersten Mikrocontrollers ausgebildeter Sicherheitsprozess parallel ausführbar sind, und
- der zweite Mikrocontroller ist als ein Watchdog derart ausgebildet, dass bei einem Erkennen eines Fehlerzustandes durch den Sicherheitsprozess und/oder durch den zweiten Mikrocontroller am zweiten Mikrocontroller ein gegenüber dem Ausgangssignal des ersten Mikrocontrollers vorrangiges Signal ausgebbar ist, und der Sicherheitsprozess ist mit dem zweiten Mikrocontroller zeitfensterbasiert kommunizierend ausgebildet und der Sicherheitsprozess ist zum Mitüberwachen des zweiten Mikrocontrollers ausgebildet. Dadurch, dass die Schaltungsanordnung einen Watchdog-Mikrocontroller und einen Hauptmikrocontroller umfasst, auf dem neben dem Hauptprozess zum Steuern oder Regeln einer eigentlichen Gerätefunktion ein Sicherheitsprozess mit abläuft, wird bei geringem Materialaufwand und bei gleichzeitig hoher Zuverlässigkeit eine gute Erkennung interner Fehler sichergestellt. Damit ist mit Vorteil eine redundante Ausbildung von wenigstens Teilen der Schaltungsanordnung und/oder ein komplettes Überwachungssystem nicht notwendig.

Weitere Ausführungsformen der Erfindung sind in den abhängigen Ansprüche spezifiziert.

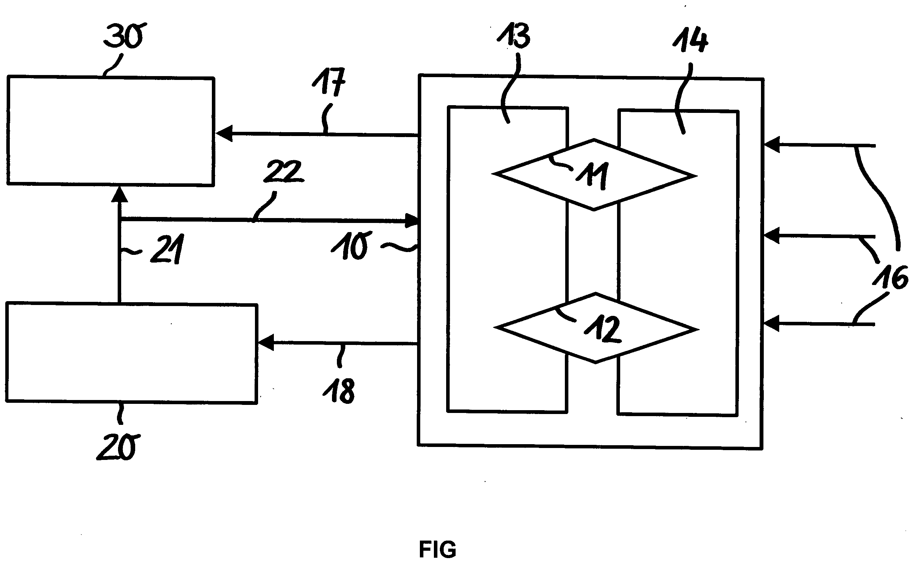

Weitere Vorteile, Merkmale und Einzelheiten der Erfindung ergeben sich aus dem im folgenden beschriebenen Ausführungsbeispiel der Erfindung anhand der Figur.

Die Figur zeigt als ein Ausführungsbeispiel der Erfindung eine Prinzipskizze einer Schaltungsanordnung. Dabei umfasst die Schaltungsanordnung einen ersten Mikrocontroller, der im folgenden als Hauptmikrocontroller 10 bezeichnet wird, und einen zweiten Mikrocontroller, der im folgenden als Watchdog-Mikrocontroller 20 bezeichnet wird.

Der Hauptmikrocontroller 10 umfasst dabei eine vorgebbare Anzahl von Eingängen, an die über entsprechende Verbindungen 16 Eingangsgrößen in den Hauptmikrocontroller 10 eingespeist werden können. Dabei können die Eingangssignale von einem Handbedienteil für ein medizinisches Gerät herrühren und sowohl binäre als auch analoge Signale umfassen. Im Rahmen einer Motorsteuerung bzw. -regelung können die Eingangssignale beispielsweise Informationen hinsichtlich eines Betriebszustands eines Motors umfassen, beispielsweise ob der Motor läuft oder abgeschaltet ist und/oder für welche Drehrichtung er geschaltet ist.

Weiterhin umfasst der Hauptmikrocontroller 10 Ausgänge, über die beispielsweise der Motor ein- und abschaltbar und/oder dessen Drehrichtung bestimmbar ist. In der Figur ist dazu lediglich exemplarisch ein Ausgang dargestellt, der über die Verbindung 17 mit einer zur Motorsteuerung bzw. -regelung zugehörigen Vorrangschaltung 30 verbunden ist.

Die Schaltungsanordnung umfasst neben dem Hauptmikrocontroller 10 und der Vorrangschaltung 30 den Watchdog-Mikrocontroller 20, der über eine Verbindung 18 mit dem Hauptmikrocontroller 10 und über eine Verbindung 21 mit der Vorrangschaltung 30 verbunden ist. Dabei gibt der Watchdog-Mikrocontroller 20 bei einem Fehlerzustand über die Verbindung 21 ein Signal aus, das bezüglich dem Ausgangssignal des Hauptmikrocontrollers 10 der Verbindung 17 vorrangig ist. Besagte Vorrangigkeit wird dabei in der Vorrangschaltung 30 entsprechend sichergestellt. Zurückkommend auf das Beispiel der Motorsteuerung bzw. -regelung bedeutet dies, dass bei Ausgeben eines entsprechenden Signals vom Watchdog-Mikrocontroller 20 über die Verbindung 21 ein Stoppen des Motors bewirkt wird, auch wenn über die Verbindung 17 vom Hauptmikrocontroller 10 herrührend beispielsweise ein Einschaltsignal für den Motor vorliegt.

Das über die Verbindung 21 ausgebbare vorrangige Signal kann dabei als ein Freigabesignal ausgebildet sein. Dies heißt, dass ein aktiver Zustand des vorrangigen Signals beispielsweise ein Starten des Motors durch das über die Verbindung 17 ausgebbare Ausgangssignal erlaubt. Setzt der Watchdog-Mikrocontroller das Freigabesignal zurück, wird der Motor gestoppt.

Der Hauptmikrocontroller 10 umfasst einen Speicherbereich 13, der als RAM oder ROM ausgebildet sein kann, sowie eine Zentralprozessoreinheit 14. Programmtechnisch ist dabei der Hauptmikrocontroller 10 derart eingerichtet, dass auf ihm parallel ein Hauptprozess 11 und ein Sicherheitsprozess 12 laufen. Der Hauptprozess 11 ist dabei derart ausgebildet, dass ein über die Verbindung 17 ausgebbares Ausgangssignal des Hauptmikrocontrollers 10 in Abhängigkeit von den über die Verbindungen 16 zugeführten Eingangssignalen und von einer über Parameter einstellbaren, im Hauptmikrocontroller 10 hinterlegbaren Verknüpfung gesteuert bzw. geregelt wird. Dieser Hauptprozess 11 ist dabei frei von einer Fehlererkennung.

Der Sicherheitsprozess 12 ist wie auch der Watchdog-Mikrocontroller 20 zum Erkennen von Fehlerzuständen des Hauptmikrocontrollers 10 ausgebildet, insbesondere zum Erkennen von Einzelfehlerzuständen. Wird dabei vom Sicherheitsprozess 12 ein Fehlerzustand erkannt, so wird eine Kommunikation mit dem Watchdog-Mikrocontroller 20 gestoppt, der daraufhin seinerseits besagtes vorrangiges Signal über die Verbindung 21 ausgibt.

Der Sicherheitsprozess 12 umfasst dabei ein Zurücklesen von Werten für das Ausgangssignal sowie ein Vergleichen dieser Werte mit Werten der Eingangssignale und der eingestellten Parameter besagter Verknüpfung. Bei einem Nichtübereinstimmen stoppt dabei der Sicherheitsprozess 12 die Kommunikation mit dem Watchdog-Mikrocontroller 20. Weiterhin überprüft der Sicherheitsprozess 12 periodisch den dem Sicherheitsprozess 12 eigenen Daten- und/oder Codierungsbereich des Speicherbereichs 13 und/oder überprüft die Zentralprozessoreinheit 14. Weiterhin sind mit dem Sicherheitsprozess 12 auch Fehlerzustände an den Eingängen und/oder Ausgängen des Hauptmikrocontrollers 10 erkennbar.

Ferner ist die Schaltungsanordnung derart ausgebildet, dass der Sicherheitsprozess 12 und der Watchdog-Mikrocontroller 20 zeitfensterbasiert miteinander kommunizieren, so dass Time-out-Zustände wie auch Zeitknappheitszustände des Hauptmikrocontrollers 10 erkennbar sind. Weiterhin werden im Triggerrahmen des Hauptmikrocontrollers 10 Informationen hinsichtlich eines Programmflusses des Sicherheitsprozesses 12 an den Watchdog-Mikrocontroller 20 übertragen, so dass vom Watchdog-Mikrocontroller 20 besagter Programmfluss überwachbar ist. Ein Oszillatorfehler wird ebenfalls vom Watchdog-Mikrocontroller 20 erkannt.

Der Watchdog-Mikrocontroller 20 ist periodisch neu zu triggern. Der Watchdog-Mikrocontroller 20 wird dabei über den Sicherheitsprozess 12 periodisch getriggert bevor der Motor eingeschaltet wird, so dass der Watchdog-Mikrocontroller 20 über die Verbindung 21 das Freigabesignal aktiviert. In einem Ruhezustand, also bei ruhendem Motor, ist das Freigabesignal deaktiviert; das heißt, dass der Watchdog-Mikrocontroller 20 nicht getriggert wird.

Über eine weitere Verbindung 22 zwischen dem Watchdog-Mikrocontroller 20 und dem Hauptmikrocontroller 10 überwacht der Sicherheitsprozess 12 wiederum den Watchdog-Mikrocontroller 20. Falls hierüber ein Fehler, insbesondere ein unerlaubtes aktives Freigabesignal oder ein fehlendes Freigabesignal erkannt wird, stoppt der Sicherheitsprozess 12 über die Verbindung 17 jegliche Bewegung des Motors bzw. es wird keine Bewegung gestartet. Weiterhin überwacht sich auch der Watchdog-Mikrocontroller 20 mit einem Überprüfen seiner RAM/ROM Zentralprozessoreinheit und Ein- und Ausgänge selbst.

### Bezugszeichenliste

- 10: Hauptmikrocontroller
- 11: Hauptprozess
- 12: Sicherheitsprozess
- 13: Speicherbereich
- 14: Zentralprozessoreinheit
- 16, 17, 18, 21, 22: Verbindung

- 20: Watchdog-Mikrocontroller

- 30: Vorrangschaltung

## Patentansprüche

1. Schaltungsanordnung, umfassend einen ersten und einen zweiten, mit dem ersten verbundenen Mikrocontroller, beinhaltend folgende Merkmale:
- Der erste Mikrocontroller ist derart eingerichtet, dass ein wenigstens ein Ausgangssignal des ersten Mikrocontrollers steuernder oder regelnder Hauptprozess und ein zum Erkennen eines Fehlerzustands des ersten Mikrocontrollers ausgebildeter Sicherheitsprozess parallel ausführbar sind,
- der zweite Mikrocontroller ist als ein Watchdog derart ausgebildet, dass bei einem Erkennen eines Fehlerzustandes durch den Sicherheitsprozess und/oder durch den zweiten Mikrocontroller am zweiten Mikrocontroller ein gegenüber dem Ausgangssignal des ersten Mikrocontrollers vorrangiges Signal ausgebbar ist, und
- der Sicherheitsprozess ist mit dem zweiten Mikrocontroller zeitfensterbasiert kommunizierend ausgebildet und der Sicherheitsprozess ist zum Mitüberwachen des zweiten Mikrocontrollers ausgebildet.

2. Schaltungsanordnung nach Anspruch 1, wobei der Hauptprozess frei von einer Fehlererkennung ausgebildet ist, wobei der Sicherheitsprozess und/oder der zweite Mikrocontroller zum Erkennen eines Einzelfehlerzustands des ersten Mikrocontrollers ausgebildet sind, und/oder wobei im Triggerrahmen des ersten Mikrocontrollers Informationen hinsichtlich eines Programmflusses des Sicherheitsprozesses an den zweiten Mikrocontroller übertragbar und von diesem überwachbar sind.

3. Schaltungsanordnung nach einem der Ansprüche 1 oder 2, wobei der erste Mikrocontroller eine über Parameter einstellbare Verknüpfung umfasst, über die in Abhängigkeit von wenigstens einem Eingangssignal am ersten Mikrocontroller das Ausgangssignal steuer- oder regelbar ist.

4. Schaltungsanordnung nach Anspruch 3, wobei der Sicherheitsprozess ein Zurücklesen von Werten des Ausgangssignals und ein Vergleichen dieser mit Werten des Eingangssignals und der Parameter umfasst.

5. Schaltungsanordnung nach einem der Ansprüche 1 bis 4, wobei der Sicherheitsprozess ein periodisches Überprüfen von RAM und/oder ROM im dem Sicherheitsprozess eigenen Daten- und/oder Codebereichs des ersten Mikrocontrollers und/oder ein Überprüfen einer Zentralprozessoreinheit des ersten Mikrocontrollers umfasst.

6. Schaltungsanordnung nach einem der Ansprüche 1 bis 5, wobei die Schaltungsanordnung eine Vorrangschaltung umfasst, der das Ausgangssignal des ersten Mikrocontrollers und das vorrangige Signal des zweiten Mikrocontrollers zugeführt sind und die derart hergerichtet ist, dass das vorrangige Signal die höhere Priorität bzw. den Vorrang hat.

7. Schaltungsanordnung nach einem der Ansprüche 1 bis 6, wobei das Ausgangssignal des ersten Mikrocontrollers zur Steuerung oder Regelung eines Motors und das vorrangige Signal als ein Freigabesignal für den Motor ausgebildet sind.

8. Verfahren zum Betrieb einer Schaltungsanordnung, umfassend einen ersten und einen zweiten, mit dem ersten verbundenen Mikrocontroller, beinhaltend folgende Merkmale:
- Im ersten Mikrocontroller werden ein wenigstens ein Ausgangssignal des ersten Mikrocontrollers steuernder oder regelnder Hauptprozess und ein zum Erkennen eines Fehlerzustands des ersten Mikrocontrollers ausgebildeter Sicherheitsprozess parallel ausgeführt,
- der zweite als ein Watchdog ausgebildete Mikrocontroller wird derart betrieben, dass bei einem Erkennen eines Fehlerzustandes durch den Sicherheitsprozess und/oder durch den zweiten Mikrocontroller am zweiten Mikrocontroller ein gegenüber dem Ausgangssignal des ersten Mikrocontrollers vorrangiges Signal ausgegeben wird, und
- wobei der Sicherheitsprozess mit dem zweiten Mikrocontroller zeitfensterbasiert kommuniziert und der Sicherheitsprozess überwacht den zweiten Mikrocontroller mit.

9. Verfahren nach Anspruch 8, wobei der Hauptprozess frei von einer Fehlererkennung ausgebildet ist, wobei der Sicherheitsprozess und/oder der zweite Mikrocontroller zum Erkennen eines Einzelfehlerzustands des ersten Mikrocontrollers ausgebildet sind und/oder wobei im Triggerrahmen des ersten Mikrocontrollers Informationen hinsichtlich eines Programmflusses des Sicherheitsprozesses an den zweiten Mikrocontroller übertragen und von diesem überwacht werden.

10. Verfahren nach einem der Ansprüche 8 oder 9, wobei der erste Mikrocontroller eine über Parameter einstellbare Verknüpfung umfasst, über die in Abhängigkeit von wenigstens einem Eingangssignal am ersten Mikrocontroller das Ausgangssignal gesteuert oder geregelt wird.

11. Verfahren nach Anspruch 10, wobei der Sicherheitsprozess ein Zurücklesen von Werten des Ausgangssignals und ein Vergleichen dieser mit Werten des Eingangssignals und der Parameter umfasst.

12. Verfahren nach einem der Ansprüche 8 bis 11, wobei der Sicherheitsprozess periodisch RAM und/oder ROM im dem Sicherheitsprozess eigenen Daten- und/oder Codebereich des ersten Mikrocontrollers und/oder eine Zentralprozessoreinheit des ersten Mikrocontrollers überprüft.

13. Verfahren nach einem der Ansprüche 8 bis 12, wobei bei einer Fehlerzustandserkennung des Sicherheitsprozesses ein Datenübertragen zu dem zweiten Mikrocontroller gestoppt wird, der daraufhin seinerseits das vorrangige Signal ausgibt.

14. Verfahren nach einem der Ansprüche 8 bis 13, wobei das Ausgangssignal des ersten Mikrocontrollers einen Motor steuert oder regelt und das vorrangige Signal den Motor freigibt oder stoppt.

15. Verfahren nach einem der Ansprüche 8 bis 14, wobei der zweite Mikrocontroller periodisch neu getriggert wird.

## Claims

1. Circuit arrangement comprising a first microcontroller and a second microcontroller connected to the first, comprising the following features:
- the first microcontroller is set up in such a manner that a main process controlling or regulating at least one output signal from the first microcontroller and a safety process designed to detect an error state of the first microcontroller can be carried out in a parallel manner,
- the second microcontroller is in the form of a watchdog such that a signal which has priority over the output signal from the first microcontroller can be output at the second microcontroller if an error state is detected by the safety process and/or by the second microcontroller, and
- the safety process is designed to communicate with the second microcontroller in a manner based on a time window, and the safety process is designed to concomitantly monitor the second microcontroller.

2. Circuit arrangement according to Claim 1, the main process being free of error detection, the safety process and/or the second microcontroller being designed to detect an individual error state of the first microcontroller, and/or information relating to a program flow of the safety process being able to be transmitted to the second microcontroller in the trigger frame of the first microcontroller and being able to be monitored by the second microcontroller.

3. Circuit arrangement according to either of Claims 1 and 2, the first microcontroller comprising a link which can be set using parameters and can be used to control or regulate the output signal on the basis of at least one input signal at the first microcontroller.

4. Circuit arrangement according to Claim 3, the safety process comprising reading back values of the output signal and comparing them with values of the input signal and of the parameters.

5. Circuit arrangement according to one of Claims 1 to 4, the safety process comprising periodically checking RAM and/or ROM in the data and/or code area of the first microcontroller belonging to the safety process and/or checking a central processor unit of the first microcontroller.

6. Circuit arrangement according to one of Claims 1 to 5, the circuit arrangement comprising a priority circuit which is supplied with the output signal from the first microcontroller and the priority signal from the second microcontroller and is set up in such a manner that the priority signal has the higher priority or precedence.

7. Circuit arrangement according to one of Claims 1 to 6, the output signal from the first microcontroller being designed to control or regulate a motor and the priority signal being in the form of an enable signal for the motor.

8. Method for operating a circuit arrangement comprising a first microcontroller and a second microcontroller connected to the first, comprising the following features:
- a main process controlling or regulating at least one output signal from the first microcontroller and a safety process designed to detect an error state of the first microcontroller are carried out in a parallel manner in the first microcontroller,
- the second microcontroller in the form of a watchdog is operated in such a manner that a signal which has priority over the output signal from the first microcontroller is output at the second microcontroller if an error state is detected by the safety process and/or by the second microcontroller, and
- the safety process communicates with the second microcontroller in a manner based on a time window, and the safety process concomitantly monitors the second microcontroller.

9. Method according to Claim 8, the main process being free of error detection, the safety process and/or the second microcontroller being designed to detect an individual error state of the first microcontroller, and/or information relating to a program flow of the safety process being transmitted to the second microcontroller in the trigger frame of the first microcontroller and being monitored by the second microcontroller.

10. Method according to either of Claims 8 and 9, the first microcontroller comprising a link which can be set using parameters and is used to control or regulate the output signal on the basis of at least one input signal at the first microcontroller.

11. Method according to Claim 10, the safety process comprising reading back values of the output signal and comparing them with values of the input signal and of the parameters.

12. Method according to one of Claims 8 to 11, the safety process periodically checking RAM and/or ROM in the data and/or code area of the first microcontroller belonging to the safety process and/or checking a central processor unit of the first microcontroller.

13. Method according to one of Claims 8 to 12, data transmission to the second microcontroller being stopped if an error is detected in the safety process, said second microcontroller in turn then outputting the priority signal.

14. Method according to one of Claims 8 to 13, the output signal from the first microcontroller controlling or regulating a motor and the priority signal enabling or stopping the motor.

15. Method according to one of Claims 8 to 14, the second microcontroller being periodically retriggered.

## Revendications

1. Arrangement de circuit, comprenant un premier microcontrôleur et un deuxième relié au premier, comprenant les caractéristiques suivantes :
- le premier microcontrôleur est conçu de telle sorte qu'un processus principal qui commande ou qui régule au moins un signal de sortie du premier microcontrôleur et un processus de sécurité configuré pour détecter un état de défaut du premier microcontrôleur peuvent être exécutés en parallèle,
- le deuxième microcontrôleur est réalisé sous la forme d'un chien de garde de telle sorte que dans le cas d'une détection d'un état de défaut par le processus de sécurité et/ou par le deuxième microcontrôleur, un signal prioritaire par rapport au signal de sortie du premier microcontrôleur peut être délivré en sortie au niveau du deuxième microcontrôleur, et
- le processus de sécurité est configuré pour communiquer avec le deuxième microcontrôleur sur la base de créneaux temporels et le processus de sécurité est configuré pour la surveillance conjointe du deuxième microcontrôleur.

2. Arrangement de circuit selon la revendication 1, le processus principal étant réalisé dépourvu d'une détection de défaut, le processus de sécurité et/ou le deuxième microcontrôleur étant configurés pour détecter un état de défaut individuel du premier microcontrôleur et/ou des informations concernant un flux de programme du processus de sécurité pouvant être transmises au deuxième microcontrôleur dans les trames de déclenchement du premier microcontrôleur et pouvant être surveillées par celui-ci.

3. Arrangement de circuit selon l'une des revendications 1 ou 2, le premier microcontrôleur comprenant une fonction logique réglable par des paramètres, par le biais de laquelle le signal de sortie peut être commandé ou régulé en fonction d'au moins un signal d'entrée appliqué au premier microcontrôleur.

4. Arrangement de circuit selon la revendication 3, le processus de sécurité comprenant une relecture de valeurs du signal de sortie et une comparaison de celles-ci avec les valeurs du signal d'entrée et des paramètres.

5. Arrangement de circuit selon l'une des revendications 1 à 4, le processus de sécurité comprenant un contrôle périodique de la RAM et/ou de la ROM dans la zone des données et/ou du code du premier microcontrôleur propre au processus de sécurité et/ou un contrôle d'une unité de processeur central du premier microcontrôleur.

6. Arrangement de circuit selon l'une des revendications 1 à 5, l'arrangement de circuit comprenant un circuit de priorité auquel sont acheminés le signal de sortie du premier microcontrôleur et le signal prioritaire du deuxième microcontrôleur et qui est préparé de telle sorte que le signal prioritaire possède la priorité la plus élevée ou est prioritaire.

7. Arrangement de circuit selon l'une des revendications 1 à 6, le signal de sortie du premier microcontrôleur étant configuré pour la commande ou la régulation d'un moteur et le signal prioritaire en tant que signal d'autorisation de marche pour le moteur.

8. Procédé pour faire fonctionner un arrangement de circuit, comprenant un premier microcontrôleur et un deuxième relié au premier, comprenant les caractéristiques suivantes :
- un processus principal qui commande ou qui régule au moins un signal de sortie du premier microcontrôleur et un processus de sécurité configuré pour détecter un état de défaut du premier microcontrôleur sont exécutés en parallèle dans le premier microcontrôleur,
- le deuxième microcontrôleur, réalisé sous la forme d'un chien de garde, est utilisé de telle sorte que dans le cas d'une détection d'un état de défaut par le processus de sécurité et/ou par le deuxième microcontrôleur, un signal prioritaire par rapport au signal de sortie du premier microcontrôleur est délivré en sortie au niveau du deuxième microcontrôleur, et
- le processus de sécurité étant configuré pour communiquer avec le deuxième microcontrôleur sur la base de créneaux temporels et le processus de sécurité surveillant conjointement le deuxième microcontrôleur.

9. Procédé selon la revendication 8, le processus principal étant réalisé dépourvu d'une détection de défaut, le processus de sécurité et/ou le deuxième microcontrôleur étant configurés pour détecter un état de défaut individuel du premier microcontrôleur et/ou des informations concernant un flux de programme du processus de sécurité étant transmises au deuxième microcontrôleur dans les trames de déclenchement du premier microcontrôleur et étant surveillées par celui-ci.

10. Procédé selon l'une des revendications 8 ou 9, le premier microcontrôleur comprenant une fonction logique réglable par des paramètres, par le biais de laquelle le signal de sortie est commandé ou régulé en fonction d'au moins un signal d'entrée appliqué au premier microcontrôleur.

11. Procédé selon la revendication 10, le processus de sécurité comprenant une relecture de valeurs du signal de sortie et une comparaison de celles-ci avec les valeurs du signal d'entrée et des paramètres.

12. Procédé selon l'une des revendications 8 à 11, le processus de sécurité contrôlant périodiquement la RAM et/ou la ROM dans la zone des données et/ou du code du premier microcontrôleur propre au processus de sécurité et/ou une unité de processeur central du premier microcontrôleur.

13. Procédé selon l'une des revendications 8 à 12, une transmission de données vers le deuxième microcontrôleur étant arrêtée dans le cas d'une détection d'état de défaut du processus de sécurité, le deuxième microcontrôleur délivrant ensuite de son côté le signal prioritaire.

14. Procédé selon l'une des revendications 8 à 13, le signal de sortie du premier microcontrôleur commandant ou régulant un moteur et le signal prioritaire autorisant la marche du moteur ou l'arrêtant.

15. Procédé selon l'une des revendications 8 à 14, le deuxième microcontrôleur étant redéclenché périodiquement.
